# EUROPEAN PATENT APPLICATION

(11) **EP 4 438 326 A1**
(43) Date of publication of application: **02.10.2024**
(21) Application number: 23166199.2
(22) Date of filing: 31.03.2023
(51) Int. Cl.: B60C 1/00, C08L 9/00, C08L 15/00

(54) **RUBBER COMPOSITION FOR PNEUMATIC TYRE AND PNEUMATIC TYRE PRODUCED THEREFROM**

(71) Applicant: Bridgestone Europe NV/SA, 1930 Zaventem (BE)
(72) Inventor: BARTOLONI, Alessandra, 00128 Rome (IT); CALZETTA, Alessandra, 00128 Rome (IT); AURISICCHIO, Claudia, 00128 Rome (IT); CONSIGLIO, Micol Di, 00128 Rome (IT)
(74) Representative: Marks & Clerk LLP

(57) **Abstract**

A rubber composition for a pneumatic tyre comprising a polymer having a low glass transition temperature and a blend of hydrocarbon resins and pneumatic tyre produced therefrom.

## Description

### FIELD OF THE INVENTION

The present invention is directed to a rubber composition for a pneumatic tyre, the use of the rubber composition in the manufacture of a pneumatic tyre and pneumatic tyres comprising or prepared from the rubber composition. The pneumatic tyres are suitable for passenger-type motor vehicles.

### BACKGROUND TO THE INVENTION

Pneumatic tyres for motor vehicles can be designed to perform well in specific conditions. For example, winter tyres remain soft at low temperatures (e.g. below 7°C) and thus provide traction in snowy or icy conditions. Such tyres are known from, for example, EP 2 643 400 A1. They are unsuitable for use in warmer temperatures because the soft compound wears more readily, reducing the lifetime of the tyre. The wet performance can also be reduced. Summer tyres are designed for high performance in warm conditions and can provide increased cornering and braking capabilities while still remaining suitable for wet conditions. This balance can be achieved by using a stiffer compound, i.e. one that softens at a higher temperature than a winter tyre compound. However, grip at low temperatures is reduced as a consequence and these tyres are unsuitable for winter conditions.

Manufacturing pneumatic tyres having good performance in all conditions poses a particular challenge for tyre designers. They must provide balanced performance that makes them suitable for a range of driving conditions, including wet weather, dry conditions and winter conditions on a range of surface types, while also providing long tread life. Achieving these aims involves balancing parameters including the softening temperature of the tyre (indicated by the glass transition temperature (T_{g}) of the elastomers in the compound) and its viscoelastic properties (indicated by the Payne effect and the ratio between loss and storage modulus (tanδ)). In particular, it can be a challenge to prepare tyres with good winter performance that maintain good wet and dry performance. Such pneumatic tyres typically use elastomers having a low T_{g} to provide the required grip at low temperatures, which needs to be balanced with other factors (e.g. filler and resin/plasticizer loading) to provide suitable performance in wet and dry conditions and a long tyre life. As a result, pneumatic tyre designers must carefully choose the combination of elastomers, fillers and resins/plasticizers that make up the rubber compound. Tyres designed for a range of conditions are known from for example WO 2022/130201 A1. However, there remains a need in the art to provide pneumatic tyres that provide a balanced performance across a range of driving conditions including good winter performance.

The present invention aims to provide a solution to one or more of the problems identified above.

### SUMMARY OF THE INVENTION

The present inventors have discovered that tyres having a good balance between wet performance, rolling resistance and dry handling and good winter performance can be prepared using rubber compositions comprising elastomers having low T_{g} and a combination of resins present at certain ratios.

Viewed from a first aspect, the present invention is directed to a rubber composition for a pneumatic tyre comprising:
a copolymer of styrene and butadiene (SBR), optionally functionalised, having a glass transition temperature (T_{g}) of from -90°C to -20°C;
optionally a diene elastomer having a T_{g} of from -130°C to -30°C;
a resin system present in an amount of at least 30 phr comprising:
   a first hydrocarbon resin having a T_{g} of at least 50°C; and,
   a second hydrocarbon resin having a T_{g} of at least 20°C;
wherein the first and second hydrocarbon resins are different and wherein a ratio of the amount of the first hydrocarbon resin to the amount of the second hydrocarbon resin on a parts per hundred rubber (phr) basis is less than 1.5:1.

Viewed from a second aspect, the present invention is directed to the use of the rubber composition as described hereinabove in the manufacture of a pneumatic tyre.

Viewed from a third aspect, the present invention is directed to a pneumatic tyre comprising the rubber composition as described hereinabove.

Viewed from a fourth aspect, the present invention is directed to a pneumatic tyre prepared from the rubber composition as described hereinabove.

Further advantageous features of the present invention are set out in the description of the invention below, the figures and the dependent claims.

### BRIEF DESCRIPTION OF THE FIGURES

Figure 1A shows how the elastic modulus at 30°C varies as the ratio of the first hydrocarbon resin to the second hydrocarbon resin varies.
Figure 1B shows how the elastic modulus at -20°C varies as the ratio of the first hydrocarbon resin to the second hydrocarbon resin varies.
Figure 2 shows a comparison of tanδ at 0°C (an indicator of wet handling) with elastic modulus at 30°C (an indicator of dry handling).
Figure 3 shows a comparison of tanδ at 60°C (an indicator of rolling resistance) with elastic modulus at -20°C (an indicator of snow handling).

### DETAILED DESCRIPTION OF THE INVENTION

The present invention is in part based on the discovery by the inventors that, for rubber compositions comprising low T_{g} elastomers (e.g. <0°C), certain resins increase the dispersion of the filler in the composition (as measured by the Payne effect) thus reducing the stiffness of the compound, while others reduce filler dispersion, increasing the stiffness of the compound. When these resins are present in certain ratios, an interactive and/or synergistic effect is observed on the properties of tyres produced from the compound, including the elastic modulus at 30°C (an indicator of dry handling), elastic modulus at -20°C (an indicator of winter handling) and tanδ at 0°C (an indicator of wet performance). As a result the compositions of the present invention are well suited to preparing tyres having balanced performance, and particularly to the preparation of tyres having good winter performance.

According to the above, in one aspect the present invention provides a rubber composition for a pneumatic tyre comprising:
a copolymer of styrene and butadiene (SBR), optionally functionalised, having a glass transition temperature (T_{g}) of from -90°C to -20°C;
optionally a diene elastomer having a T_{g} of from -130°C to -30°C;
a resin system present in an amount of at least 30 phr comprising:
   a first hydrocarbon resin having a T_{g} of at least 50°C; and,
   a second hydrocarbon resin having a T_{g} of at least 20°C;
wherein the first and second hydrocarbon resins are different and wherein a ratio of the amount of the first hydrocarbon resin to the amount of the second hydrocarbon resin on a parts per hundred rubber (phr) basis is less than 1.5:1.

### Hydrocarbon resins

Resins are compounds that are solid or highly viscous at standard ambient temperature and pressure (25°C, 10⁵ Pa). Hydrocarbon resins are essentially based on carbon and hydrogen but may comprise other types of atoms. They can be aliphatic, cycloaliphatic, aromatic, hydrogenated aromatic, and aliphatic/aromatic, i.e. based on aliphatic and/or aromatic monomers. Hydrocarbon resins can also be qualified as thermoplastic resins in the sense that they soften on heating and can thus be moulded.

Examples of such hydrocarbon resins include those selected from the group consisting of cyclopentadiene homopolymer or copolymer resins (abbreviated as CPD), dicyclopentadiene homopolymer or copolymer resins (abbreviated as DCPD), terpene homopolymer or copolymer resins, rosinic resins, C₅ homopolymer or copolymer resins which may be partially or fully hydrogenated, C₉ homopolymer or copolymer resins which may be partially or fully hydrogenated, alpha-methyl-styrene homopolymer or copolymer resins and combinations thereof. Any hydrocarbon resin fulfilling the glass transition temperature requirements may be used with the present invention.

In the present invention, the first hydrocarbon resin and the second hydrocarbon resin are different and they may differ by any structural feature and/or measurable property. For example, the hydrocarbon resins may be from different classes of resin, e.g. terpenic and rosinic or partially hydrogenated C₅ and rosinic. Additionally or alternatively, they may differ in properties such as glass transition temperature, softening point, aromaticity and/or polarity.

The first hydrocarbon resin may have a glass transition temperature that is higher than the glass transition temperature of the second hydrocarbon resin. The first hydrocarbon resin may have a glass transition temperature that is from 10°C to 40°C higher than the second hydrocarbon resin, preferably from 15°C to 30°C higher than the second hydrocarbon resin. The glass transition temperature of a material is the temperature (or range of temperatures) over which the material transitions from a hard and relatively brittle "glassy" state into a viscous or rubbery state as the temperature is increased. It is measured by DSC (Differential Scanning Calorimetry). For example, in one embodiment the first hydrocarbon resin has a glass transition temperature that is 17°C higher than the second hydrocarbon resin. In another embodiment, the first hydrocarbon resin has a glass transition temperature that is 28°C higher than the second hydrocarbon resin.

The first hydrocarbon resin may have a lower aromaticity than the second hydrocarbon resin. Aromaticity values defined herein are measured by ¹H NMR as the percentage content of aromatic protons having a chemical shift from 6.5 to 8.5 ppm. For example, the aromaticity of the first hydrocarbon resin may be from 1 to 10% lower than that of the second hydrocarbon resin, preferably from 3% to 7% lower, for example 5.5% or 4.5% lower than that of the second hydrocarbon resin. In this regard, the first hydrocarbon resin may have an aromaticity of less than 4%, preferably from 0% to 3%. The second hydrocarbon resin may have and aromaticity of at least 4%, preferably from 5% to 15%, more preferably from 5.5% to 7.5%.

The present inventors have found that increasing the ratio of the first hydrocarbon resin to second hydrocarbon resin in the compositions of the present invention may improve filler dispersion (and thus reduces stiffness), while reducing the ratio of first hydrocarbon to second hydrocarbon resin reduces filler dispersion, increasing stiffness. When the first hydrocarbon resin and second hydrocarbon resin are present in a particular ratio range an interactive and/or synergistic effect is observed on the properties of tyres produced from the compound, including the elastic modulus at 30°C (an indicator of dry handling), elastic modulus at -20°C (an indicator of winter handling) and tanδ at 0°C (an indicator of wet performance). As a result the compositions of the present invention are well suited to preparing tyres having balanced performance, and particularly to the preparation of tyres having good winter performance.

In preferred embodiments, the ratio of the amount of the first hydrocarbon resin to the amount of the second hydrocarbon resin on a phr basis may be from 0.05:1 to 1.45:1, preferably from 0.1:1 to 1:1, more preferably from 0.15:1 to 0.9:1, for example 0.15:1, 0.2:1, 0.3:1, 0.4:1, 0.5:1, 0.6:1, 0.7:1, 0.8:1 or 0.9:1. The present inventors have discovered that the interactive/synergistic effect is particularly pronounced when the ratio of the resins is within these ranges.

The first hydrocarbon resin may be present in an amount of up to 30 phr, preferably from 5 to 25 phr, more preferably from 7 to 22 phr, for example 7, 8, 9, 10, 11, 12, 13, 14, 15, 16, 17, 18, 19, 20, 21 or 22 phr. The second hydrocarbon resin may be present in an amount of up to 70 phr, preferably from 20 to 65 phr, more preferably from 25 to 60 phr, more preferably from 30 to 55 phr, for example 30, 35, 40, 45, 50, or 55 phr and any intermediate value. The first and second hydrocarbon resins may be present in any combination of these amounts.

The first hydrocarbon resin may have a glass transition temperature (T_{g}) of from 50°C to 90°C, preferably from 55°C to 80°C, for example 55, 56, 57, 58, 59, 60, 61, 62, 63, 64, 65, 66, 67, 68, 69, 70, 71, 72, 73, 74, 75, 76, 77, 78, 79, or 80°C. In preferred embodiments, the first hydrocarbon resin is a terpenic resin having a T_{g} according to these values.

The second hydrocarbon resin may have a T_{g} of from 20°C to 80°C, preferably from 30°C to 70°C, more preferably from 40°C to 60°C, for example 40, 41, 42, 43, 44, 45, 46, 47, 48, 49, 50, 51, 52, 53, 54, 55, 56, 57, 58, 59, or 60°C. In preferred embodiments, the second hydrocarbon resin is a rosinic resin having a T_{g} according to these values.

The first hydrocarbon resin may comprise (e.g. consist of) a terpenic resin. Terpenic resins include resins that are a mixture of terpene monomers (referred to herein as a heteropolymer), or a terpene homopolymer, wherein the terpene homopolymer may be an α-pinene homopolymer. They may be, for example an oligoterpene resin (i.e., a resin prepared from a terpene as the sole monomer), a terpene hydrocarbon resin (i.e., a resin prepared from a terpene and non-terpene hydrocarbon monomer(s)), and/or a terpene phenolic resin (i.e., a resin prepared from a terpene and phenolic compound). The basic molecular formula of terpenes are multiples of (C₅H₈)ₙ where n is the number of linked isoprene units and is greater than 1. Examples of terpenes suitable for use in the terpenic resin include, without limitation, isoprene, limonene, terpene, α-pinene, β-pinene, δ-3 carene, β-phellandrene and pyrolysates of α-pinene, β-pinene, δ-3 carene, δ-2 carene, turpentine, and combinations thereof. For example terpenic resin may comprise α-pinene or a mixture of α-pinene and β-pinene monomers. The terpenic resin may be substantially free of limonene, wherein the amount of limonene is less than 10 wt%, preferably less than 5 wt% and more preferably less than 1 wt% based upon the total amount of the terpenic resin. In preferred embodiments, the terpenic resin comprises a mixture of α-pinene and β-pinene monomers wherein limonene is present in an amount of less than 10 wt%. Any terpenic resin that fulfils the glass transition temperature requirement can be used in the present invention. Suitable terpenic resins include Kraton Sylvatraxx 8115.

The softening point of the terpenic resin may be at least 70°C, preferably from 70°C to 160°C, more preferably from 100°C to 130°C, for example 100°C, 105°C, 110°C, 115°C, 120°C, 125°C, or 130°C. The softening point of a material is the temperature at which is softens beyond a certain softness, which is measured using a ring and ball apparatus according to ISO 4625.

The aromaticity of the terpenic resin as measured by ¹H NMR may greater than 0, preferably from 0.1 to 5, preferably 1.

Additionally or alternatively, the first hydrocarbon resin may comprise a partially hydrogenated C₅ resin. As used herein, the term "C₅ resin" refers to a resin obtained by polymerisation of a cracked naphtha feed that contains C₅ monomers. C₅ monomers include olefins, linear conjugated diolefins and cyclic conjugated diolefins. Other monomers may additionally be present in the feed and these include, but are not limited to, dicyclopentadiene (DCPD).

In one embodiment, the C₅ resin for use in the invention may be obtained by copolymerisation of C₅ monomers and dicyclopentadiene (DCPD) monomers. Where any DCPD monomers are present, these will generally be provided in low amounts. For example, the content of DCPD in the feed used to produce the resin may be less than about 5 wt.%, e.g. less than about 2 wt.%. Preferably, the C₅ resin may comprise monomer units derived from C₅ monomers and from DCPD. As such the partially hydrogenated C₅ resin may comprise a partially hydrogenated C₅ and dicyclopentadiene (DCPD) copolymer, preferably wherein DCPD is present in an amount of less than 5 wt% of the C₅ and DCPD monomers. However, in another embodiment, the feed used to provide the C₅ resin may exclude any DCPD monomer. This monomer can be removed from the feed stream by methods generally known in the art. In one embodiment, the C₅ resin may therefore consist essentially of monomer units derived from C₅ monomers.

As used herein, the term "partially hydrogenated" means that the resin component contains less than 100% olefinic protons, which may be determined by ¹H NMR spectroscopy. Partially hydrogenated resins are well known in the art and may have different degrees of hydrogenation. In some embodiments, the partially hydrogenated resin may contain less than 95% olefinic protons, more preferably less than 90% olefinic protons. In some embodiments, it may contain less than 75% olefinic protons, for example less than 50% olefinic protons. In some embodiments, the partially hydrogenated resin may contain less than 40% olefinic protons, less than 25% olefinic protons, less than 15% olefinic protons, or less than 10% olefinic protons. For example, it may contain less than 9%, less than 8%, less than 7%, or less than 6% olefinic protons. In one embodiment, the partially hydrogenated resin may contain about 5% or more olefinic protons. For example, it may contain from 5% to 90% olefinic protons. In one embodiment, the partially hydrogenated resin may contain about 5% olefinic protons, i.e. it will be about 95% hydrogenated. Suitable partially hydrogenated C₅ resins include Eastman Impera E1780.

The softening point of the partially hydrogenated C₅ resin may be at least 70°C, preferably from 70°C to 160°C, more preferably from 110°C to 150°C, for example 110°C, 115°C, 120°C, 125°C, 130°C, 135°C, 140°C, 145°C, or 150°C.

The aromaticity of the partially hydrogenated C₅ resin as measured by NMR may greater than 0, preferably from 0.1 to 5, preferably 2.

The second hydrocarbon resin may comprise (e.g. consist of) a rosinic resin. Rosinic resins include resins that are mixtures of isomer organic acids (e.g. resin acid or rosin acids), characterised by a common structure comprising three C₆ fused rings, double bonds and a single carboxylic group. Rosin is a solid resinous material that occurs naturally in pine trees. There are three major sources of rosin, (1) gum rosin from the oleoresin extrudate of the living pine tree, (2) wood rosin from the oleoresin contained in the aged stumps; and (3) tall oil rosin from the waste carboxyl group to the liquor recovered as a by-product in the Kraft paper industry. The primary component of rosin is typically abietic acid. Rosinic resins include rosin ester resins, which may be an ester of rosin and a polyhydric alcohol. The polyhydric alcohol can be selected from the group consisting of ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, and mixtures thereof. Any rosinic resin that fulfils the glass transition temperature requirement can suitably be used in the present invention. Suitable rosinic resins include the Kraton Sylvatraxx 2097.

The softening point of the rosinic resin may be greater than 50°C, preferably from 70°C to 130°C, more preferably from 90°C to 110°C, for example 90°C, 95°C, 100°C, or 110°C or any intermediate value.

The aromaticity of the rosinic resin as measured by ¹H NMR may greater than 1, preferably from 3.5 to 9.5, preferably 6.5.

The present inventors have discovered that the interactive/synergistic effect of the resin system can be observed at high resin loadings. Accordingly, the resin system may be present in an amount of from 30 to 90 phr, preferably 35 to 80 phr, more preferably 40 to 70 phr, for example 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 phr.

### Elastomers

The copolymer of styrene and butadiene may be a styrene-butadiene copolymer (abbreviated as SBR) and may be an emulsion SBR or eSBR (i.e. an SBR prepared by emulsion polymerization), a solution SBR or sSBR (i.e. an SBR prepared by solution polymerization), or a mixture of both. The T_{g} of the copolymer of styrene and butadiene may be from -90°C to -20°C, preferably from -75°C to -40°C, preferably from -65°C to -50°C, for example -65°C, -60°C, -55°C, or -50°C. The skilled person is aware of how the structure of the copolymer may be modified in order to adjust the T_{g} to the required value. The copolymer of styrene and butadiene may be present in an amount of from 40 to 90 phr, preferably from 45 to 80 phr, for example 45, 50, 55, 60, 65, 70, 75 or 80 phr.

The copolymer of styrene and butadiene may be functionalised with carboxyl groups, preferably terminal carboxyl groups. These carboxyl groups may have a structure according to Formula (I): 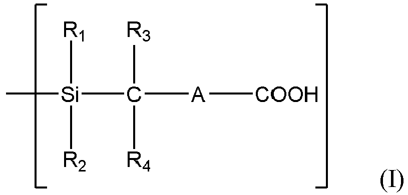 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, NR₇, S and SiR₈R₉; or, an alkylene radical containing one or more heteroatoms, preferably wherein the heteroatoms are one or more selected from the group consisting of O, NR₇, S, and SiR₈R₉.

In Formula (I), R₁ and R₂ may each independently be a hydrogen, C₁ to C₁₂ linear or branched alkyl, C₂ to C₁₂ linear or branched alkenyl, C₁ to C₁₂ linear or branched alkoxy, C₃ to C₁₂ cycloalkyl, C₂ to C₁₂ cycloalkoxy, C₆ to C₁₂ aryl, C₆ to C₁₂ aryloxy, C₇ to C₁₄ arylalkyl, C₇ to C₁₄ alkylaryl, C₆ to C₂₄ alkylaryloxy, C₅ to C₂₄ aralkyl, or a C₆ to C₂₄ aralkoxy radical. Preferably, R₁ and R₂ may each independently be a C₁ to C₆ linear or branched alkyl, C₂ to C₆ linear or branched alkenyl, C₁ to C₆ linear or branched alkoxy, C₃ to C₁₂ cycloalkyl, C₂ to C₁₂ cycloalkoxy, or a C₆ to C₁₂ aryl radical. Preferably, R₁ and R₂ may each independently be a C₁ to C₆ linear or branched alkyl, C₂ to C₆ linear or branched alkenyl, C₁ to C₆ linear or branched alkoxy, or a C₆ to C₁₂ aryl radical. Preferably, R₁ and R₂ may each independently be a C₁ to C₃ linear or branched alkyl, C₂ to C₃ linear or branched alkenyl, C₁ to C₃ linear or branched alkoxy, or a C₆ aryl radical. For example, R₁ and R₂ may each independently be a methyl, tert-butyl, prop-1-enyl, ethoxy, or phenyl radical. More preferably, R₁ and R₂ are methyl radicals.

R₃ and R₄ may each independently be a hydrogen, C₁ to C₁₂ linear or branched alkyl, C₃ to C₁₂ cycloalkyl, C₆ to C₁₂ aryl, C₅ to C₂₄ aralkyl, or a C₅ to C₂₄ alkaryl radical. Preferably R₃ and R₄ may each independently be a hydrogen, C₁ to C₆ linear or branched alkyl, C₂ to C₆ linear or branched alkenyl, C₁ to C₆ linear or branched alkoxy, or a C₆ to C₁₂ aryl radical. More preferably, R₃ and R₄ may each independently be a hydrogen or methyl radical. In a particular embodiment, R₃/R₄ and "A" together form a C₆ aryl.

"A" may independently be a substituted or unsubstituted C₁ to C₆ linear alkyl radical; one or more heteroatoms selected from the group consisting of O, NR₇, S and SiR₈R₉; or, a substituted or unsubstituted C₁ to C₆ linear alkyl radical containing one or more heteroatoms selected from the group consisting of O, NR₇, S, and SiR₈R₉. Preferably, "A" may independently be a substituted or unsubstituted C₁ to C₃ linear alkyl radical; one or more heteroatoms selected from the group consisting of O, NR₇, S and SiR₈R₉; or, a substituted or unsubstituted C₁ to C₃ linear alkyl radical containing one or more heteroatoms selected from the group consisting of O, NR₇, S, and SiR₈R₉. Where "A" is substituted, it may be substituted with one or more selected from the group consisting of a C₁ to C₆ linear alkyl radical, and a C₆ to C₁₂ aryl radical. Preferably, "A" may be substituted with a C₁ to C₃ linear alkyl radical or a C₆ aryl radical. More preferably, "A" may be substituted with a C₁ radical. R₇ may be hydrogen, C₁ to C₆ linear alkyl, for example methyl, or trimethylsilyl. R₈ and R₉ may independently be C₁ to C₆ linear alkyl, for example methyl. Preferably, A is a C₂ alkyl radical containing an S atom. The structure of "A" as a C₂ alkyl radical containing an S atom is presented below.

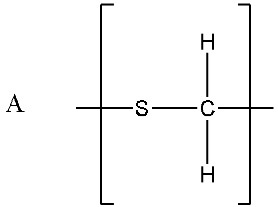

The carboxyl groups may be present as a carboxylate of the Formula (II): 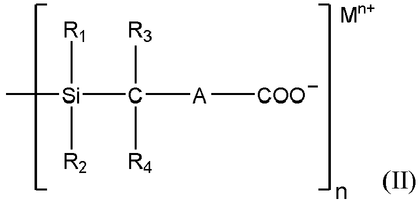 wherein:
R₁ and R₂ are as defined above for Formula (I);
R₃ and R₄ are as defined above for Formula (I);
A is as defined above for Formula (I);
M is a metal or semi-metal of valency 1 to 4, for example, Li, Na, K, Mg, Ca, Zn, Fe, Co, Ni, Al, Nd, Ti, Sn, Si, Zr, V, Mo or W; and
n is an integer from 1 to 4.

In the compounds of Formula (II), M may be Li and n may be 1.

The further definitions of R₁, R₂, R₃, R₄, R₇, R₈ and R₉ in Formula (II) are the same as those above for Formula (I).

The functionalised SBR may be obtainable by reaction of the SSBR copolymer with one or more functionalising reagents in the form of silalactones. The silalactones may be compounds of the Formula (III): 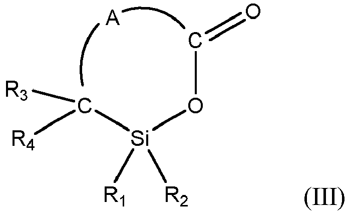 wherein
R₁ and R₂ are as defined above for Formula (I);
R₃ and R₄ are as defined above for Formula (I); and,
A is as defined above for Formula (I).

The further definitions of R₁, R₂, R₃, R₄, R₇, R₈ and R₉ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trimethyl-l-oxa-2-silacyclohexan-6-one, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 2,2-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

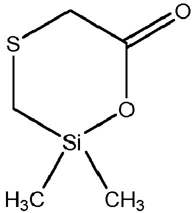

The carboxyl group may be bonded to the SBR copolymer via one or more divalent structural elements of the Formula (V): 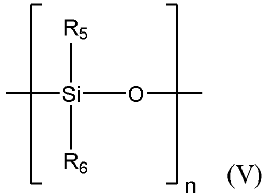 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si.

When the divalent structural element is present, the SBR copolymer is bonded at the silicon end of the divalent structural element according to the below:

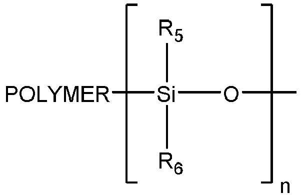

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV): 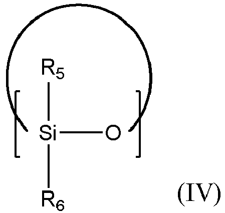 wherein
n is as defined above for Formula (V);
R₅, R₆ are as defined above for Formula (V).

R₅ and R₆ may each independently a hydrogen, C₁ to C₁₂ linear or branched alkyl, C₃ to C₁₂ cycloalkyl, C₆ to C₁₂ aryl, C₇ to C₁₄ aralkyl, or a C₇ to C₁₄ alkaryl radical. Preferably, R₅ and R₆ may each independently be a C₁ to C₆ linear or branched alkyl, preferably, C₁ to C₃ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

It is particularly advantageous for the SBR copolymer to be terminated with carboxyl groups derived from 2,2-dimethyl-1-oxa-4-thia-2-silacyclohexan-6-one that is bonded to the polymer via a divalent structural element derived from hexamethylcyclotrisiloxane. In this embodiment, the carboxyl group of Formula (I) (having R₁, R₂, R₃ and R₄ as methyl radicals and "A" as the C₂ alkyl radical containing an S atom shown above) is bonded to the copolymer by the divalent structural element according to Formula (V), wherein R₅ and R₆ are methyl radicals and n is 3.

The SBR copolymer may have a styrene content of from 1% to 20% by weight of the SBR copolymer, preferably from 5% to 15% by weight, more preferably from 8% to 10% by weight, for example 8%, 9%, or 10% by weight. The SBR copolymer may have a vinyl content of from 10% to 50% by weight of the SBR copolymer, preferably from 20% to 40%, more preferably from 28% to 38%, for example 28%, 29%, 30%, 31%, 32%, 33%, 34%, 35%, 36%, 37%, or 38% by weight of the SBR copolymer.

The SBR copolymer may have mean molar masses (number-average, Mn) of 10,000 to 2,000,000 g/mol, preferably 100,000 to 1,000,000 g/mol.

The SBR copolymer may have a Mooney viscosity [ML 1+4 (100° C)] of 10 to 200 Mooney units, for example 30 to 150 Mooney units, 40 to 90 Mooney units, 50 to 60 Mooney units, for example 50, 51, 52, 53, 54, 55, 56, 57, 58, 59, 60 Mooney units.

The SBR copolymer may be extended with an extender oil such that the extended SBR copolymer comprises from 1 to 30 phr extender oil, preferably from 1 to 10 phr. The extender oil may be one or more selected from the group consisting of DAE (Distillate Aromatic Extract), Tdae (Treated Distillate Aromatic Extract), MES (Mild extraction solvate), RAE (Residual Aromatic Extract), TRAE (Treated Residual Aromatic Extract), naphthenic oil, heavy naphthenic oils, paraffin oils, vegetable oils such as coconut oil, synthetic oils such as alkylbenzene oils and castor oils. Preferably, the SBR copolymer is extended with an aromatic oil, such as Treated Distillate Aromatic Extract oil (Tdae) such that the extended SBR copolymer comprises from 2.5 to 7.5 phr Treated Distillate Aromatic Extract oil.

The synthesis of sSBR copolymers terminated with carboxyl groups and the compounds of Formulae (I) to (V) above is discussed in detail in, for example, International patent application number WO 2014/173706 A1.

The composition may further comprise a diene elastomer. A diene elastomer is an elastomer derived at least in part (e.g. in a homopolymer or a copolymer) of diene monomers, i.e. monomers carrying two carbon-carbon double bonds, which may or may not be conjugated. Examples of suitable diene elastomers include polybutadienes, natural rubber, synthetic polyisoprenes, butadiene copolymers, isoprene copolymers and mixtures thereof. In preferred embodiments, the diene elastomer is a polybutadiene rubber. The T_{g} of the polybutadiene rubber may be from -120°C to -80°C, preferably from -110°C to -90°C, for example -110°C, -100°C, - 95°C, or -90°C. When present, the diene elastomer may be included in an amount of from 10 to 60 phr, preferably from 20 to 55 phr.

### Filler components

The rubber composition may further comprises an inorganic reinforcing filler, which may include silica-based mineral fillers and/or aluminium-based mineral fillers. The present inventors have discovered that a high inorganic reinforcing filler loading can be beneficial in providing the technical effects of the present invention. Preferably the silica-based filler is silica (SiO₂). Additional silaceous fillers that are suitable include precipitated amorphous silica, wet silica (hydrated silicic acid), dry silica (anhydrous silicic acid), fumed silica, calcium silicate, aluminum silicate, magnesium silicate (e.g., Mg₂SiO₄, MgSiO₃), magnesium calcium silicate (CaMgSiO₄), aluminum calcium silicate (e.g., Al₂O₃.CaO₂SiO₂). Preferably, the aluminium-based filler is alumina (Al₂O3) or aluminum hydroxide (e.g. Al(OH)₃). In preferred embodiments, the inorganic reinforcing filler is a combination of silica and aluminium hydroxide (Al(OH)₃). The total amount of inorganic reinforcing filler (e.g. silica) may be at least 70 phr, preferably from 80 to 120 phr.

The rubber composition may comprise additional fillers (i.e. fillers in addition to the inorganic reinforcing filler), such as carbon black. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black in the rubber compositions of the present invention is CORAX^{®} N234 by Orion Engineered Carbons. The amount of carbon black that the rubber compositions of the present invention comprises is not particularly limited, but may be from 0.1 to 20 parts by weight of the rubber component, for example from 2 to 8 phr, for example, 2, 3, 4, 5, 6, 7, or 8 phr.

### Additional components

The rubber composition may further comprises one or more oils, which are liquid at standard ambient temperature and pressure (25°C, 10⁵ Pa). They may also be referred to as liquid plasticisers. These oils may be, for example, one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, preferably oleates such as octyl oleate or 2-ethylhexyl oleate, phosphate plasticizers, sulfonate plasticizers and mixtures thereof. In preferred embodiments, the oil may be a combination of TDAE oils and octyl oleate. The oil may be present in an amount of at least 1 phr, preferably 5 to 40 phr, more preferably 7 to 15 phr, for example 7, 8, 9, 10, 11, 12, 13, 14, or 15 phr.

In addition to the components described above the rubber compositions may comprise additional components that the skilled person would include in order to prepare rubber compositions that are suitable the preparation of pneumatic tyres. These include, for example, vulcanising agents (such as sulphur), vulcanisation accelerators, vulcanisation accelerator auxiliaries, silane coupling agents, anti-degradation agents (such as antioxidants or anti-ozonants), waxes, and processing agents.

In a particularly preferred embodiment, the rubber composition comprises:
a copolymer of styrene and butadiene, optionally functionalised with terminal carboxyl groups, having a T_{g} of from -75°C to -40°C;
optionally a butadiene rubber having a T_{g} of from -120°C to -80°C;
a resin system present in an amount of 40 to 70 phr comprising:
   a first hydrocarbon resin which is a terpenic resin having a T_{g} of from 55°C to 80°C in an amount of from 7 to 22 phr; and,
   a second hydrocarbon resin which is a rosinic resin, having a T_{g} of from 40°C to 60°C in an amount of from 30 to 55 phr;
optionally a reinforcing inorganic filler present in an amount of from 80 to 120 phr;
wherein the ratio of the amount of the first hydrocarbon resin to amount of the second hydrocarbon resin is from 0.15:1 to 0.9:1.

In preparing the rubber composition of the present invention, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

Unless otherwise indicated, the amounts of the components in the rubber compositions of the present invention are provided in parts per hundred rubber (phr), which means parts by weight per hundred parts of elastomer (or of the total elastomers if several elastomers are present). The term "rubber composition" may be used interchangeably with the term "rubber compound".

### Pneumatic tyres

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, or a high performance tyre. The present inventors have found that the interactive/synergistic effect of the rubber compositions of the present invention make them particularly suited to use in tyres having good winter performance.

In view of the above, the present invention is directed to a pneumatic tyre comprising the rubber composition of the present invention and/or a pneumatic tyre prepared from the rubber composition of the present invention.

In a further aspect, the present invention is directed to the use of the rubber composition in the manufacture of a pneumatic tyre.

The part of the tyre in which the rubber composition of the present invention is used is not specifically limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

### EXAMPLES

The present invention will now be described by the following non-limiting examples.

### Measurement methods

### Glass transition temperature (T_{g})

Glass transition temperatures (T_{g}) were measured by DSC (Differential Scanning Calorimetry) according to standard ASTM D3418 (1999).

### Payne Effect

The Payne Effect was calculated from the compound dynamic properties measured according to the ISO 4664 standard.

### Mooney viscosity

Mooney viscosity was measured on the raw functionalised or non-functionalised polymer according to the ASTM D1646 Standard.

### Elastic Modulus (E)

The Elastic Modulus (E') is used to evaluate grip performance. Dynamic physical testing to determine E' at 30°C and -20°C was conducted in accordance with the ISO 4664 standard.

### Loss Factor (tan δ)

The loss factor (tangent δ, or tan δ) at different temperatures is used to evaluate rolling resistance and wet traction. Tan δ at lower temperatures is an indicator of wet traction. Tan δ at 60°C is thus an indicator of rolling resistance (RR). Dynamic physical testing to determine tan δ was conducted in accordance with the ISO 4664 standard.

### General method

Tyre compounds were prepared according to the following general method. The following components were compounded in the amounts recited in Table 1 below. The values in Table 1 are all expressed in phr. Table 2 shows measurements of various mechanical properties performed on test pieces of tread prepared using the compositions of Table 1.

### Components

| | |
|---|---|
| Elastomers: | Functionalised solution styrene-butadiene rubber having a T_{g} of -60°C (prepared according to Example 3 of WO 2014/173706 A1) (SBR) Butadiene rubber (BR) having a T_{g} of -105°C (Europrene ^{®} Neocis BR 40) |
| Silica: | Silica (STD-SiO₂) (Ultrasil VN3) |
| Hydrocarbon resins: | |
| | Terpenic resin having a T_{g} of 66°C and an aromaticity of 1 (Kraton Sylvatraxx 8115) |
| | Rosinic resin having a T_{g} of 49°C and an aromaticity of 6.5 (Kraton Sylvatraxx 2097) |
| Further Additives: | |
| | Carbon black (Corax^{®} N234) |
| | Silane (Evonik Industries AG Si 69^{®}) |
| | Paraffinic wax |
| | MES oil |
| | Treated Distillate Aromatic Extract (TDAE) |
| | Sulfur |
| | 1,3-diphenyl guanidine (DPG) |
| | Dibenzothiazyl disulfide (MBTS) |
| | N-cyclohexyl-2-benzothiazyl sulfenamide (CBS) |
| | Zinc oxide (ZnO) |
| | Zinc salts of high MW fatty acids (Aktiplast^{®} PP) |
| | Stearic acid. |

**Table 1**

| Component | **Comp. Ex. 1** | **Ex. 1** | **Ex. 2** | **Ex. 3** | **Ex. 4** | **Ex. 5** | **Comp. Ex. 2** | **Comp. Ex. 3** | **Comp. Ex. 4** | **Comp. Ex. 5** |
|---|---|---|---|---|---|---|---|---|---|---|
| BR | 25 | 25 | 25 | 25 | 25 | 25 | 25 | 25 | 25 | 25 |
| SBR | 75 | 75 | 75 | 75 | 75 | 75 | 75 | 75 | 75 | 75 |
| Terpenic resin | 50 | 5 | 10 | 15 | 20 | 25 | 30 | 35 | 40 | 45 |
| Rosinic resin | 0 | 45 | 40 | 35 | 30 | 25 | 20 | 15 | 10 | 5 |
| TDAE | 3 | 3 | 3 | 3 | 3 | 3 | 3 | 3 | 3 | 3 |
| MES | 8 | 8 | 8 | 8 | 8 | 8 | 8 | 8 | 8 | 8 |
| Silica | 100 | 100 | 100 | 100 | 100 | 100 | 100 | 100 | 100 | 100 |
| Carbon black | 12 | 12 | 12 | 12 | 12 | 12 | 12 | 12 | 12 | 12 |
| Zinc oxide | 2 | 2 | 2 | 2 | 2 | 2 | 2 | 2 | 2 | 2 |
| Stearic acid | 2 | 2 | 2 | 2 | 2 | 2 | 2 | 2 | 2 | 2 |
| Silane | 7 | 7 | 7 | 7 | 7 | 7 | 7 | 7 | 7 | 7 |
| Wax | 2.2 | 2.2 | 2.2 | 2.2 | 2.2 | 2.2 | 2.2 | 2.2 | 2.2 | 2.2 |
| Zinc salts of high MW fatty acids | 3 | 3 | 3 | 3 | 3 | 3 | 3 | 3 | 3 | 3 |
| 6PPD | 1.9 | 1.9 | 1.9 | 1.9 | 1.9 | 1.9 | 1.9 | 1.9 | 1.9 | 1.9 |
| TMQ | 0.3 | 0.3 | 0.3 | 0.3 | 0.3 | 0.3 | 0.3 | 0.3 | 0.3 | 0.3 |
| Sulfur | 1.2 | 1.2 | 1.2 | 1.2 | 1.2 | 1.2 | 1.2 | 1.2 | 1.2 | 1.2 |
| CBS | 1.1 | 1.1 | 1.1 | 1.1 | 1.1 | 1.1 | 1.1 | 1.1 | 1.1 | 1.1 |
| DPG | 1.4 | 1.4 | 1.4 | 1.4 | 1.4 | 1.4 | 1.4 | 1.4 | 1.4 | 1.4 |
| TBZTD | 0.4 | 0.4 | 0.4 | 0.4 | 0.4 | 0.4 | 0.4 | 0.4 | 0.4 | 0.4 |
| **Terpenic/Rosinic ratio** | 0 | 0.1 | 0.3 | 0.4 | 0.7 | 1.0 | 1.5 | 2.3 | 4.0 | 9.0 |

**Table 2**

| **Properties** | **Comp. Ex. 1** | **Ex. 1** | **Ex. 2** | **Ex.** 3 | **Ex. 4** | **Ex. 5** | **Comp. Ex. 2** | **Comp. Ex. 3** | **Comp. Ex. 4** | **Comp. Ex. 5** |
|---|---|---|---|---|---|---|---|---|---|---|
| **E'(-20°) MPa** | 21.4 | 22.5 | 25.2 | 24.1 | 24.0 | 22.0 | 22.7 | 22.3 | 22.3 | 21.9 |
| **tan Delta (-20°)** | 0.836 | 0.759 | 0.750 | 0.759 | 0.769 | 0.768 | 0.788 | 0.794 | 0.791 | 0.807 |
| **tan Delta (0°)** | 0.533 | 0.519 | 0.523 | 0.520 | 0.514 | 0.497 | 0.504 | 0.496 | 0.509 | 0.520 |
| **E'(30°) MPa** | 6.1 | 6.8 | 7.2 | 7.3 | 7.3 | 6.7 | 6.6 | 6.6 | 6.6 | 6.4 |
| **tan Delta (60°)** | 0.199 | 0.223 | 0.214 | 0.218 | 0.211 | 0.196 | 0.194 | 0.186 | 0.193 | 0.194 |
| **Payne Effect%** | 45.8 | 52.1 | 58.6 | 54.0 | 53.6 | 48.5 | 48.1 | 47.7 | 48.9 | 47.8 |

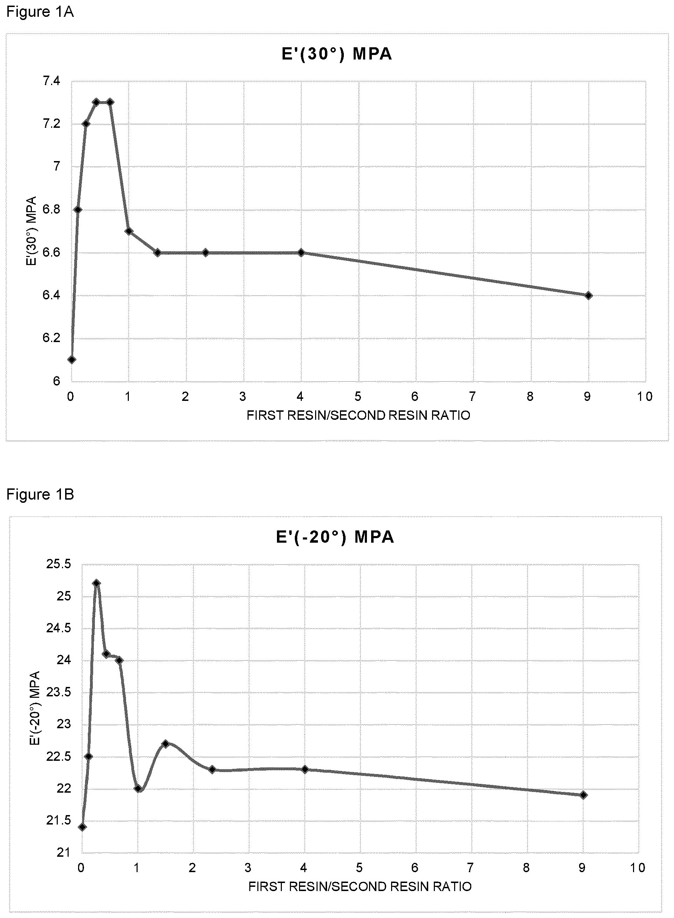

The present inventors have discovered that certain properties, including E'(30°) and E'(-20°), have peak values when the first and second hydrocarbon resins are within a certain ratio range, as shown by Figures 1A and 1B. E'(30°) is an indicator of the dry handling/balance of a tyre, while E'(-20°) is an indicator for snow balance/handling. Maximising both of these properties is therefore important when preparing tyre having good winter performance that maintains good dry performance and the present inventors have achieved this with the compositions of the present invention.

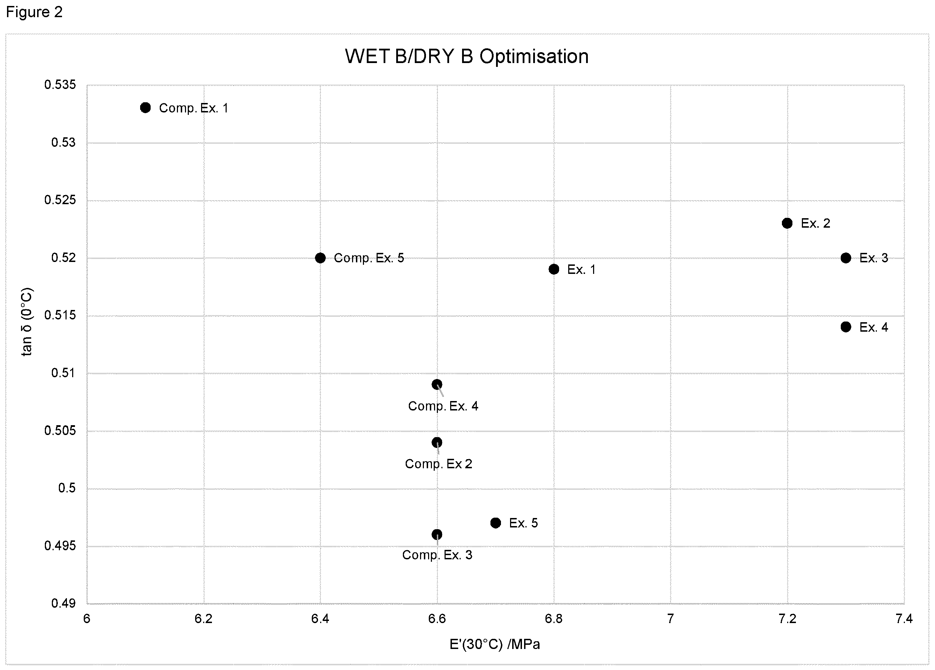

Figure 2 shows the E'(30°) vs tan Delta (0°) data. E'(30°) is an indicator of the dry handling/balance and tan Delta (0°) is an indicator of wet balance/handling. As Figure 2 shows, the compositions of the present invention balance these two properties to provide a tyre with superior handling in both wet and dry conditions.

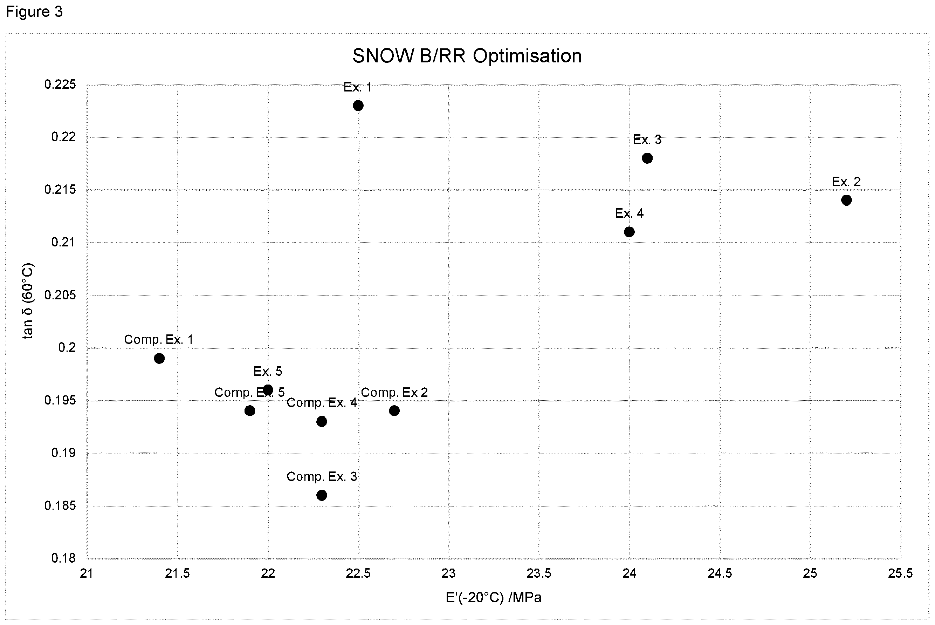

Figure 3 shows the E'(-20°) vs tan Delta (60°) data. E'(-20°) is an indicator of the snow handling/balance and tan Delta (60°) is an indicator of rolling resistance. Figure 3 shows that the compositions of the invention have good balance between these properties and demonstrates their superior snow handling.

## Claims

1. A rubber composition for a pneumatic tyre comprising:
a copolymer of styrene and butadiene (SBR), optionally functionalised, having a glass transition temperature (T_{g}) of from -90°C to -20°C;
optionally a diene elastomer having a T_{g} of from -130°C to -30°C;
a resin system present in an amount of at least 30 phr comprising:
a first hydrocarbon resin having a T_{g} of at least 50°C; and,
a second hydrocarbon resin having a T_{g} of at least 20°C;
wherein the first and second hydrocarbon resins are different and wherein a ratio of the amount of the first hydrocarbon resin to the amount of the second hydrocarbon resin on a parts per hundred rubber (phr) basis is less than 1.5:1.

2. The rubber composition according to claim 1, wherein the first and second hydrocarbon resins have different glass transition temperatures, preferably wherein the first hydrocarbon resin has a higher glass transition temperature than the glass transition temperature of the second hydrocarbon resin, more preferably wherein the first hydrocarbon resin has a glass transition temperature that is from 10°C to 40°C higher than the second hydrocarbon resin.

3. The rubber composition according to claim 1 or 2, wherein the first and second hydrocarbon resins have a different aromaticity, preferably wherein the first hydrocarbon resin has a lower aromaticity than the aromaticity of the second hydrocarbon resin, more preferably wherein the aromaticity of the first hydrocarbon resin is from 1 to 10% lower than the aromaticity of the second hydrocarbon resin.

4. The rubber composition according to any one of the preceding claims, wherein the ratio of the amount of the first hydrocarbon resin to the amount of the second hydrocarbon resin on a phr basis is from 0.05:1 to 1.45:1, preferably from 0.1:1 to 1:1, more preferably from 0.15:1 to 0.9:1.

5. The rubber composition according to any one of the preceding claims, wherein the first hydrocarbon resin is present in an amount of up to 30 phr, preferably from 5 to 25 phr, more preferably from 7 to 22 phr.

6. The rubber composition according to any one of the preceding claims, wherein the second hydrocarbon resin is present in an amount of up to 70 phr, preferably from 20 to 65 phr, more preferably from 25 to 60 phr, more preferably from 30 to 55 phr.

7. The rubber composition according to any one of the preceding claims, wherein the first hydrocarbon resin has a T_{g} of from 50°C to 90°C, preferably from 55°C to 80°C.

8. The rubber composition according to any one of the preceding claims, wherein the second hydrocarbon resin has a T_{g} of from 20°C to 80°C, preferably from 30°C to 70°C, more preferably from 40°C to 60°C.

9. The rubber composition according to any one of the preceding claims, wherein the first hydrocarbon resin is a terpenic resin.

10. The rubber composition according to any one of the preceding claims, wherein the second hydrocarbon resin is a rosinic resin.

11. The rubber composition according to any one of the preceding claims, wherein the resin system is present in an amount of from 30 to 90 phr, preferably 35 to 80 phr, more preferably 40 to 70 phr.

12. The rubber composition according to any one of the preceding claims, wherein the T_{g} of the copolymer of styrene and butadiene is from -75°C to -40°C, preferably from -65°C to -50°C.

13. The rubber composition according to any one of the preceding claims, wherein the copolymer of styrene and butadiene is present in an amount of from 40 to 90 phr, preferably from 45 to 80 phr.

14. The rubber composition according to any one of the preceding claims, wherein the copolymer of styrene and butadiene is functionalised with carboxyl groups, preferably terminal carboxyl groups.

15. The rubber composition according to claim 14, wherein the carboxyl groups are groups of the Formula (I): 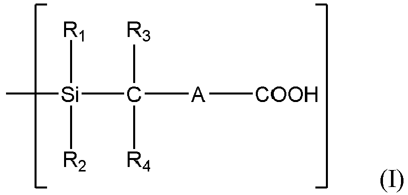 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉, wherein R₇ may be hydrogen, C₁ to C₆ linear alkyl, preferably methyl, or trimethylsilyl and wherein R₈ and R₉ may independently be C₁ to C₆ linear alkyl, preferably methyl.

16. The rubber composition according to claim 14 or 15, wherein the carboxyl group is bonded to the copolymer of styrene and butadiene via one or more divalent structural elements of the Formula (V): 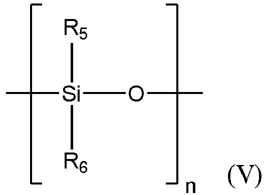 preferably wherein the divalent structural elements are derived from cyclosiloxanes of the Formula (IV): 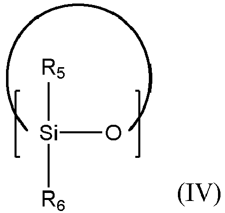 wherein
n is an integer from 3 to 6;
R₅, R₆ are the same or different and are each independently a hydrogen, alkyl, cycloalkyl, aryl, alkaryl, or aralkyl radical; which may contain one or more heteroatoms, preferably wherein the heteroatoms are O, N, S or Si, more preferably wherein the divalent structural elements are derived from one or more cyclosiloxanes selected from the group consisting of hexamethylcyclotrisiloxane, octamethylcyclotetrasiloxane, decamethylcyclopentasiloxane, and dodecamethylcyclohexasiloxane.

17. The rubber composition according to any one of the preceding claims, wherein the composition comprises a diene elastomer, preferably wherein the diene elastomer is a polybutadiene rubber.

18. The rubber composition according to any one of the preceding claims, wherein the T_{g} of the diene elastomer is from -120°C to -80°C, preferably from -110°C to - 90°C.

19. The rubber composition according to any one of the preceding claims, wherein the diene elastomer is present in an amount of from 20 to 60 phr, preferably from 40 to 55 phr.

20. The rubber composition according to any one of the preceding claims, wherein the rubber composition further comprises an inorganic reinforcing filler, preferably silica, in an amount of at least 70 phr, preferably from 80 to 120 phr.

21. The rubber composition according to any one of the preceding claims, comprising:
a copolymer of styrene and butadiene, optionally functionalised with terminal carboxyl groups, having a T_{g} of from -75°C to -40°C;
optionally a butadiene rubber having a T_{g} of from -120°C to -80°C;
a resin system present in an amount of 40 to 70 phr comprising:
a first hydrocarbon resin which is a terpenic resin having a T_{g} of from 55°C to 80°C in an amount of from 7 to 22 phr; and,
a second hydrocarbon resin which is a rosinic resin, having a T_{g} of from 40°C to 60°C in an amount of from 30 to 55 phr;
optionally a reinforcing inorganic filler present in an amount of from 80 to 120 phr;
wherein the ratio of the amount of the first hydrocarbon resin to amount of the second hydrocarbon resin is from 0.15:1 to 0.9:1.

22. Use of the rubber composition according to any of claims 1 to 21 in the manufacture of a pneumatic tyre.

23. A pneumatic tyre comprising the rubber composition according to any one of claims 1 to 21.

24. A pneumatic tyre prepared from the rubber composition according to any one of claims 1 to 21.
